# EUROPÄISCHE PATENTSCHRIFT

(11) **EP 2 431 132 B1**
(45) Veröffentlichungstag und Bekanntmachung des Hinweises auf die Patenterteilung: **03.07.2019**
(21) Anmeldenummer: 11007157.8
(22) Anmeldetag: 03.09.2011
(51) Int. Cl.: B25F 5/00

(54) **Handgeführtes Arbeitsgerät**
Manually operated work device
Appareil de travail manuel

(30) Priorität: 18.09.2010 DE 102010045994
(43) Veröffentlichungstag der Anmeldung: 21.03.2012
(73) Patentinhaber: Andreas Stihl AG & Co. KG, 71336 Waiblingen (DE)
(72) Erfinder: Heinzelmann, Georg, 71364 Winnenden (DE); Liebhard, Gernot, 71332 Waiblingen (DE); Förstner, Dirk, 71384 Weinstadt (DE)
(74) Vertreter: Reinhardt, Annette

(56) Entgegenhaltungen:
- DE-A1-102009 015 422
- US-A1- 2004 098 869

## Beschreibung

Die Erfindung betrifft ein handgeführtes Arbeitsgerät der im Oberbegriff des Anspruchs 1 angegebenen Gattung.

Aus der DE 10 2007 039 828 B3 ist eine Elektrowerkzeugmaschine mit einem Lüfter und einem Akku bekannt, die als Bohrhammer ausgeführt ist und im hinteren Gehäusebereich Lufteintrittsöffnungen besitzt. Die Kühlluft wird über den benachbart zu den Lufteintrittsöffnungen angeordneten Motor durch das Gehäuse in Richtung auf den Akku gesaugt und tritt oberhalb des Akkus aus dem Gehäuse aus.

Um eine ausreichende Kühlung des Antriebsmotors zu erreichen, muss eine ausreichende Kühlluftmenge durch das Gehäuse gefördert werden. Bei sehr großen Lufteintrittsöffnungen ist die Gefahr vergrößert, dass Schmutzpartikel in das Gehäuse angesaugt werden können. Bei kleinen Lufteintrittsöffnungen führt das Fördern eines großen Volumenstroms zu hohen Strömungsgeschwindigkeiten und Unterdrücken, die ebenfalls das Ansaugen von Schmutzpartikeln begünstigen können. Gerade die elektronische Steuerung ist sowohl hitze- als auch verschmutzungsempfindlich. Hier muss eine ausreichende Kühlung gewährleistet werden und gleichzeitig muss sichergestellt werden, dass die elektronische Steuerung nicht übermäßig verschmutzt.

Aus der DE 10 2009 015 422 A1 ist ein Elektrobohrer bekannt, bei dem ein Teil des Kühlluftstroms über eine Vielzahl von Durchtrittsöffnungen in ein Batteriegehäuse und von dort durch einen Handgriff des Elektrobohrers zum Motor strömt. Ein weiterer Kühlluftstrom strömt im Bereich des Motors in das Gehäuse ein, um den Motor direkt zu kühlen.

Der Erfindung liegt die Aufgabe zugrunde, ein handgeführtes Arbeitsgerät der gattungsgemäßen Art zu schaffen, das eine ausreichende Kühlung bei geringer Verschmutzungsneigung besitzt.

Diese Aufgabe wird durch ein handgeführtes Arbeitsgerät mit den Merkmalen des Anspruchs 1 gelöst.

Über die Lufteintrittsöffnung wird nur ein Teilkühlluftstrom angesaugt. Ein zweiter Teilkühlluftstrom wird über die Aufnahme für die Energieversorgungseinheit angesaugt. Durch die Aufteilung des Gesamtkühlluftstroms in mehrere Teilkühlluftströme, die an unterschiedlichen Orten angesaugt werden, kann die Eintrittsöffnung für jeden Teilluftstrom vergleichsweise klein gehalten werden. Die gesamte Ansaugfläche kann vergrößert werden, so dass sich geringe Strömungsgeschwindigkeiten ergeben. Die Aufnahme der Energieversorgungseinheit ist üblicherweise in einem Bereich angeordnet, in dem im Betrieb nur geringe Verschmutzungen stattfinden, so dass aus diesem Bereich vergleichsweise saubere Kühlluft angesaugt werden kann. Aufgrund des konstruktiv gebildeten kleinen Abstands zwischen der Energieversorgungseinheit und der Aufnahme sind keine weiteren Maßnahmen zur Abdeckung der Eintrittsöffnung notwendig.

Vorteilhaft ist die Aufnahme der Energieversorgungseinheit in einem dem Werkzeug des Arbeitsgeräts abgewandten Bereich angeordnet. Aus diesem Bereich kann saubere Kühlluft angesaugt werden. Die Lufteintrittsöffnung für den ersten Kühlluftstrom liegt insbesondere näher am Werkzeug als die Aufnahme der Energieversorgungseinheit. Über die Lufteintrittsöffnung wird damit eher schmutzbelastete Luft angesaugt. Zwischen der Energieversorgungseinheit und dem Rand der Aufnahme ist ein erster Spalt gebildet, über den der zweite Kühlluftstrom angesaugt wird. Aufgrund der Ansaugung über einen Spalt ist das Eindringen von Schmutzpartikeln, die größer sind als der Spalt, konstruktiv verhindert. Der zweite Kühlluftstrom dient insbesondere zur Kühlung der Steuerung. Vorteilhaft besitzt die Steuerung mindestens eine im Betrieb vom zweiten Kühlluftstrom umströmte Kühlrippe. Damit wird die Steuerung von der eher sauberen Luft des zweiten Kühlluftstroms gekühlt. Dadurch wird eine Verschmutzung der Steuerung verhindert.

Vorteilhaft besitzt das Gehäuse einen Gehäuseinnenraum, in dem die Steuerung angeordnet ist. Der Gehäuseinnenraum ist dabei insbesondere durch eine Zwischenplatte von der Aufnahme der Energieversorgungseinheit getrennt. Dadurch ergibt sich ein einfacher Aufbau. Die Zwischenplatte kann beispielsweise Teil eines Kontaktträgers der Energieversorgungseinheit sein. Die Lufteintrittsöffnung für den ersten Kühlluftstrom führt vorteilhaft in den Gehäuseinnenraum. Die Steuerung ist in üblicher Arbeitshaltung des Arbeitsgeräts vorzugsweise oberhalb der Lufteintrittsöffnung für den ersten Kühlluftstrom angeordnet. Wird der erste Kühlluftstrom teilweise zur Steuerung gelenkt, so muss er nach oben strömen, wobei schwerere Schmutzpartikel nach unten abfallen können. Durch die Umlenkung und die Strömung nach oben wird eine teilweise Reinigung des ersten Kühlluftstroms erreicht. Es wird verhindert, dass größere Schmutzpartikel zur Steuerung gelangen können.

Zwischen der Zwischenplatte und der Gehäusewand des Gehäuses ist insbesondere ein zweiter Spalt gebildet, durch den der zweite Kühlluftstrom in den Gehäuseinnenraum des Arbeitsgeräts strömt. Der zweite Spalt kann einfach ohne zusätzliche Mittel hergestellt werden. Eine Abdichtung der Zwischenplatte gegenüber der Gehäusewand kann entfallen, so dass sich ein einfacher Aufbau ergibt. Dadurch, dass sich der Spalt über einen Großteil des Umfangs der Zwischenplatte erstrecken kann, ergibt sich eine lange Spaltlänge und dadurch eine vergleichsweise große Gesamtfläche, über die der zweite Kühlluftstrom aus der Aufnahme in den Gehäuseinnenraum übertreten kann. Dadurch werden geringe Strömungsgeschwindigkeiten erreicht. Die Steuerung ist insbesondere benachbart zu einem Abschnitt des zweiten Spalts angeordnet. Die Steuerung wird damit hauptsächlich vom zweiten, sauberen Kühlluftstrom gekühlt.

Zweckmäßig besitzt das Arbeitsgerät eine erste Längsseite und eine gegenüberliegende, zweite Längsseite, wobei an der ersten Längsseite die Lufteintrittsöffnung angeordnet ist. Eine vorteilhafte Kühlluftführung ergibt sich, wenn der erste Kühlluftstrom an der ersten Längsseite in das Gehäuse eintritt und von der ersten Längsseite in Richtung auf die zweite Längsseite strömt, wobei der erste Kühlluftstrom benachbart zur zweiten Längsseite im Gehäuse umgelenkt wird und zurück in Richtung auf die erste Längsseite strömt. Vorteilhaft liegt im Strömungsweg von der zweiten Längsseite zur ersten Längsseite der Antriebsmotor und im Strömungsweg von der ersten Längsseite zur zweiten Längsseite die Steuerung, so dass die Kühlluft zuerst über die Steuerung strömt und anschließend durch den Antriebsmotor. Vorteilhaft strömen der erste Kühlluftstrom und der zweite Kühlluftstrom im Strömungsweg von der ersten zur zweiten Längsseite zusammen. Zweckmäßig verlassen der erste Kühlluftstrom und der zweite Kühlluftstrom das Gehäuse über eine gemeinsame Luftaustrittsöffnung. Die Luftaustrittsöffnung ist dabei vorteilhaft im Bereich der ersten Längsseite und unterhalb der Lufteintrittsöffnung angeordnet.

Vorteilhaft strömt der zweite Kühlluftstrom sowohl an der ersten als auch an der zweiten Längsseite aus der Aufnahme der Energieversorgungseinheit in den Gehäuseinnenraum. Insbesondere strömt der zweite Kühlluftstrom auch an der Oberseite des Gehäuses in den Gehäuseinnenraum. Dadurch wird eine große Strömungsfläche bei geringer Spaltbreite erreicht.

Vorteilhaft ist die Energieversorgungseinheit ein Akkupack. Es kann jedoch auch vorgesehen sein, dass die Energieversorgungseinheit aus einer oder mehreren Batterien besteht. Der Antriebsmotor ist vorteilhaft ein Außenläufermotor und das Gebläserad ist am Rotor des Antriebsmotors integriert. Das Arbeitsgerät ist insbesondere eine Motorsäge mit einem hinteren Handgriff und einem Griffrohr, wobei die Aufnahme für die Energieversorgungseinheit an der Oberseite des Gehäuses in einen Bereich zwischen dem hinteren Handgriff und dem Griffrohr angeordnet ist.

Ein Ausführungsbeispiel der Erfindung wird im Folgenden anhand der Zeichnung erläutert. Es zeigen:
- Fig. 1: eine perspektivische Darstellung der Motorsäge,
- Fig. 2: eine perspektivische Ansicht von oben auf die Motorsäge mit entnommenem Akkupack,
- Fig. 3: eine perspektivische Ansicht auf die Motorsäge mit Akkupack und abgenommenem oberem Gehäusedeckel,
- Fig. 4: eine perspektivische Ansicht von oben auf die Motorsäge aus Fig. 3,
- Fig. 5: eine teilgeschnittene, perspektivische Seitenansicht der Motorsäge mit entnommenem Akkupack,
- Fig. 6: eine perspektivische Ansicht von oben auf die Motorsäge aus Fig. 5,
- Fig. 7: eine teilgeschnittene perspektivische Ansicht der Motorsäge von der der Führungsschiene zugewandten Seite,
- Fig. 8: eine perspektivische Schnittdarstellung von der der Führungsschiene abgewandten Seite,
- Fig. 9: eine teilgeschnittene perspektivische Darstellung der Motorsäge.

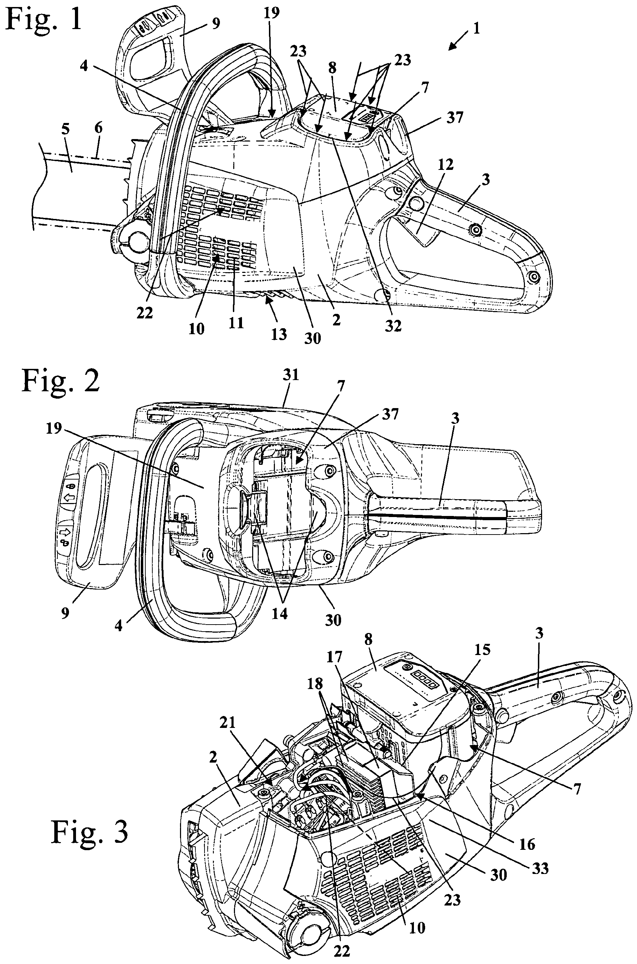

Fig. 1 zeigt als Ausführungsbeispiel für ein handgeführtes Arbeitsgerät eine Motorsäge 1. Die Motorsäge 1 besitzt ein Gehäuse 2, das an seiner Oberseite 19 von einem Gehäusedeckel 37 verschlossen ist. Fig. 1 zeigt die Motorsäge 1 in üblicher Arbeitshaltung. In üblicher Arbeitshaltung ist die Oberseite 19 dem Boden abgewandt angeordnet. Am Gehäuse 2 sind ein hinterer Handgriff 3 sowie ein Griffrohr 4 angeordnet. Das Griffrohr 4 übergreift das Gehäuse 2. Die Motorsäge 1 besitzt eine Führungsschiene 5, die nach vorne ragt und an der eine Sägekette 6 umlaufend angetrieben ist. Zwischen dem Griffrohr 4 und der Führungsschiene 5 ist ein Handschutz 9 angeordnet.

Im Gehäuse 2 ist eine Aufnahme 7 ausgebildet, in der ein Akkupack 8 als Energieversorgungseinheit angeordnet ist. Die Aufnahme 7 öffnet nach oben im Bereich des Gehäusedeckels 37. Die Aufnahme 7 öffnet an der Oberseite 19 des Gehäuses in einem Bereich zwischen dem hinteren Handgriff 3 und dem Griffrohr 4. Zwischen dem Akkupack 8 und der Wand der Aufnahme 7 ist ein erster Spalt 32 ausgebildet, der sich über den gesamten Umfang des Akkupacks 8 erstreckt. Das Gehäuse 2 besitzt eine erste Längsseite 30, die in Fig. 1 vorne liegend angeordnet ist und in der eine Lufteintrittsöffnung 10 angeordnet ist. Die Lufteintrittsöffnung 10 ist von einem Gitter 11 in eine Vielzahl von Teilöffnungen aufgeteilt. Das Gitter 11 setzt sich aus optischen Gründen nach vorne fort, obwohl hier keine Eintrittsöffnung ins Gehäuseinnere mehr vorgesehen ist. Im Ausführungsbeispiel sind nur die dem hinteren Handgriff zugewandten drei Spalten des Gitters 11 im Bereich der Lufteintrittsöffnung 10 angeordnet. Über die Lufteintrittsöffnung 10 wird ein erster Kühlluftstrom 22 in das Innere des Gehäuses 2 angesaugt. Ein zweiter Kühlluftstrom 23 wird über den ersten Spalt 32 am Umfang des Akkupacks 8 angesaugt.

Wie Fig. 1 auch zeigt, ist am hinteren Handgriff 3 ein Gashebel 12 angeordnet. An der der Oberseite 19 abgewandten Seite des Gehäuses 2 ist benachbart zur ersten Längsseite 30 eine Luftaustrittsöffnung 13 vorgesehen.

Wie Fig. 2 zeigt, ist der Akkupack 1 im Gehäuse 2 über zwei Akkuverriegelungen 14 gehalten. Die Akkuverriegelungen 14 decken Öffnungen am Gehäuse des Akkupacks 8 teilweise ab, so dass der Eintritt von Schmutzpartikeln aus dem zweiten Kühlluftstrom 23 in den Akkupack 8 vermieden ist.

Wie Fig. 3 zeigt, ist im Gehäuse 2 ein Gehäuseinnenraum 21 ausgebildet, in den der erste Kühlluftstrom 22 mündet. Der Gehäuseinnenraum 21 ist von der Aufnahme 7 über eine Zwischenplatte 15 getrennt. Die Zwischenplatte 15 ist im Ausführungsbeispiel Teil einer Kontaktplatte für den Akkupack 8. Zwischen der Zwischenplatte 15 und der Gehäusewand 33 des Gehäuses 2 ist ein zweiter Spalt 16 gebildet, über den der zweite Kühlluftstrom 23 in den Gehäuseinnenraum 21 übertritt. Im Gehäuseinnenraum 21 ist benachbart zur Zwischenplatte 15 eine elektronische Steuerung 17 angeordnet. Die Steuerung 17 besitzt eine Vielzahl von Kühlrippen 18, die mindestens teilweise im zweiten Kühlluftstrom 23 angeordnet sind. Die Steuerung 17 und auch die Kühlrippen 18 sind in üblicher Arbeitshaltung der Motorsäge 1 oberhalb der Lufteintrittsöffnung 10 angeordnet, so dass der erste Kühlluftstrom 22 erst nach einer Umlenkung nach oben zu den Kühlrippen 18 der Steuerung 17 gelangen kann.

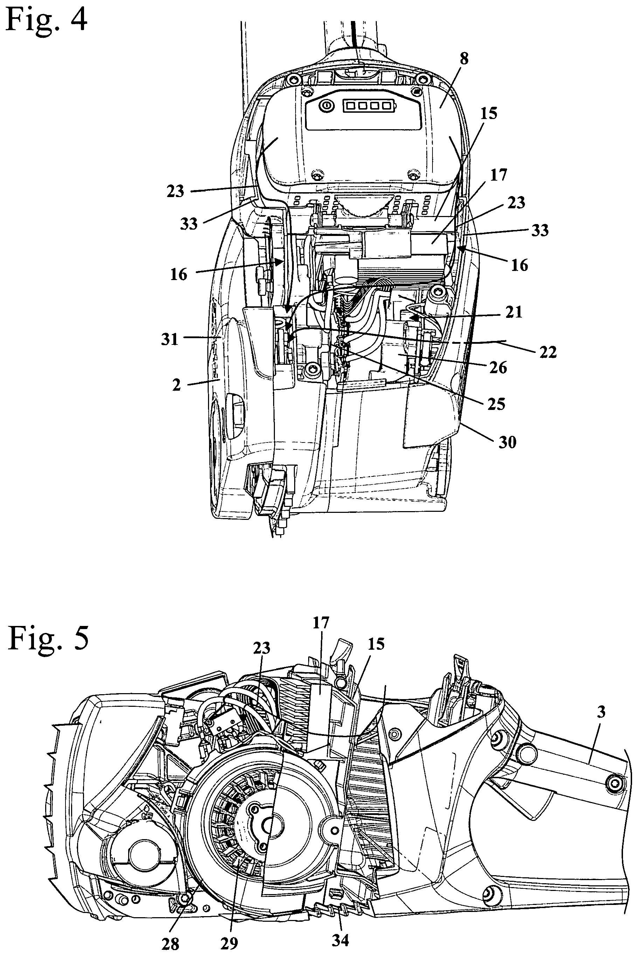

Wie Fig. 4 zeigt, strömen sowohl ein Teil des zweiten Kühlluftstroms 23 als auch der erste Kühlluftstrom 22 im Gehäuseinnenraum 21 zunächst von der ersten Längsseite 30 zur zweiten Längsseite 31. Wie Fig. 4 zeigt, ist die Steuerung 17 benachbart zum zweiten Spalt 16 an der Zwischenplatte 15 angeordnet. Die Luftaustrittsöffnung 13 ist im Bereich unterhalb der Lufteintrittsöffnung 10 angeordnet. Die Motorsäge 1 besitzt einen Antriebsmotor 24, der als elektronisch kommutierter Außenläufermotor ausgebildet ist. Der Antriebsmotor 24 treibt die Sägekette 6 an und wird von der Steuerung 17 gesteuert. Fig. 4 verdeutlicht die Strömung des zweiten Kühlluftstroms 23. Der zweite Kühlluftstrom 23 strömt sowohl an der ersten Längsseite 30 als auch an der gegenüberliegenden, zweiten Längsseite 31 der Motorsäge 1 in den Gehäuseinnenraum 21. Die Längsseiten 30 und 31 sind dabei etwa in Richtung der Führungsschiene 5 ausgerichtet. Der Teilstrom des zweiten Kühlluftstroms 23, der an der ersten Längsseite 30 zwischen der Wand 33 und der Zwischenplatte 15 hindurchströmt, strömt im Gehäuseinnenraum 21 entlang der Steuerung 17.

Wie Fig. 5 zeigt, besitzt die Motorsäge 1 ein Gebläserad 29, an dessen Außenumfang eine Gebläsespirale 28 ausgebildet ist. Das Gebläserad 29 zieht die beiden Kühlluftströme 22 und 23 von der ersten Längsseite 31 in Richtung auf die zweite Längsseite 30 und fördert die Kühlluftströme 22 und 23 dann durch die Gebläsespirale 28 über die Luftaustrittsöffnung 13 in die Umgebung. Auch die Luftsaustrittsöffnung 13 ist von einem Gitter 34 abgedeckt (Fig. 5).

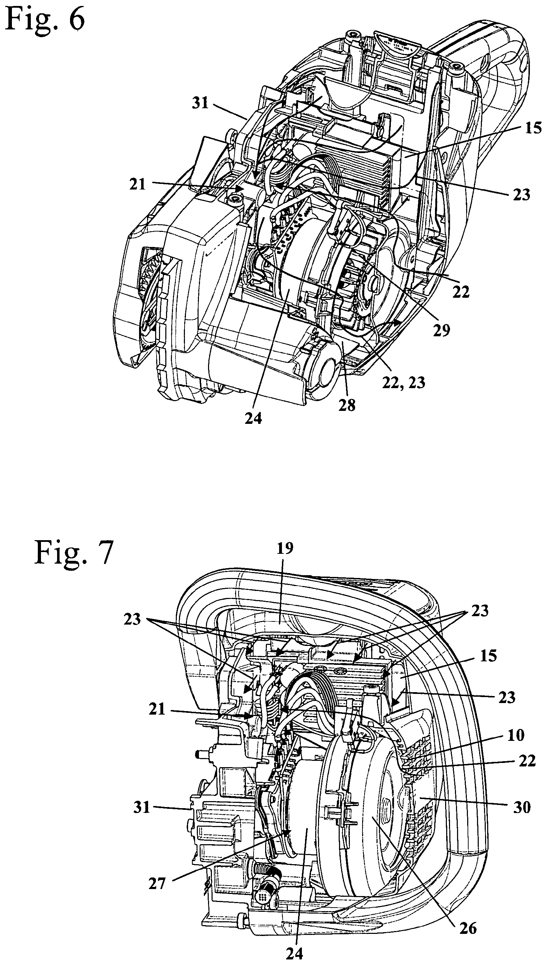

Wie Fig. 6 zeigt, strömt der zweite Kühlluftstrom 23 auch im Bereich der Oberseite des Gehäuses 2 an der Zwischenplatte 15 in den Gehäuseinnenraum 21. Im Bereich der zweiten Längsseite 31 strömen der erste Kühlluftstrom 22 und der zweite Kühlluftstrom 23 gemeinsam und werden nach unten und in Richtung auf die erste Längsseite 30 umgelenkt.

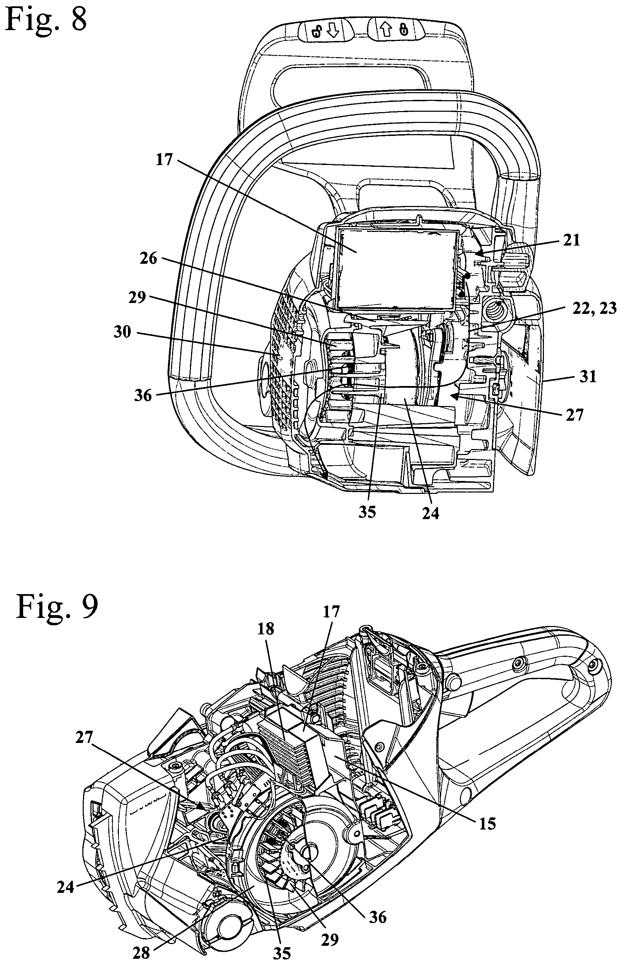

Wie Fig. 7 zeigt, ist unterhalb des Gehäuseinnenraums 21 ein Motoraufnahmeraum 27 ausgebildet, in dem der Antriebsmotor 24 angeordnet ist. Auch Fig. 9 zeigt die Anordnung des Antriebsmotors 24 im Motoraufnahmeraum 27. Im Bereich des Gebläserads 29 ist der Antriebsmotor 24 von einer Abdeckung 26 abgedeckt, die in ihrem Inneren die Gebläsespirale 28 bildet. Wie auch Fig. 7 verdeutlicht, wird der zweite Kühlluftstrom 23 sowohl an den beiden Längsseiten 30 und 31 als auch an der Oberseite 19 in den Gehäuseinnenraum 21 angesaugt.

Wie Fig. 8 zeigt, besitzt der Antriebsmotor 24 einen Rotor 35, an dem das Gebläserad 29 integriert ist, und einen innerhalb des Rotors 35 angeordneten Stator 36, der die Wicklungen umfasst. Im Bereich des Antriebsmotors 24 werden die Kühlluftströme 22 und 23 von der zweiten Längsseite 31 zur ersten Längsseite 30 gefördert.

## Patentansprüche

1. Handgeführtes Arbeitsgerät mit einem elektrischen Antriebsmotor (24) und einer Energieversorgungseinheit für den Antriebsmotor (24), wobei die Energieversorgungseinheit in einer Aufnahme (7) eines Gehäuses (2) des Arbeitsgerätes angeordnet ist, wobei das Arbeitsgerät ein Gebläserad (29) zur Förderung von Kühlluft besitzt, wobei das Gebläserad (29) von dem Antriebsmotor (24) angetrieben ist, wobei das Gehäuse (2) mindestens eine Lufteintrittsöffnung (10) für Kühlluft besitzt, über die das Gebläserad (29) im Betrieb einen ersten Kühlluftstrom (22) ansaugt,
wobei ein zweiter Kühlluftstrom (23) über die Aufnahme (7) der Energieversorgungseinheit in das Gehäuse (2) angesaugt wird,
**dadurch gekennzeichnet, dass** das Arbeitsgerät eine elektronische Steuerung (17) besitzt und dass zwischen der Energieversorgungseinheit und dem Rand der Aufnahme (7) ein erster Spalt (32) gebildet ist, über den der zweite Kühlluftstrom (23) angesaugt wird.

2. Arbeitsgerät nach Anspruch 1,
**dadurch gekennzeichnet, dass** die Aufnahme (7) der Energieversorgungseinheit in einem dem Werkzeug des Arbeitsgeräts abgewandten Bereich angeordnet ist, und dass die Lufteintrittsöffnung (10) für den ersten Kühlluftstrom (22) näher am Werkzeug liegt als die Aufnahme (7) der Energieversorgungseinheit.

3. Arbeitsgerät nach Anspruch 1 oder 2,
**dadurch gekennzeichnet, dass** der zweite Kühlluftstrom (23) zur Kühlung der Steuerung (17) dient, wobei die Steuerung (17) insbesondere mindestens eine im Betrieb vom zweiten Kühlluftstrom (23) umströmte Kühlrippe (18) besitzt.

4. Arbeitsgerät nach einem der Ansprüche 1 bis 3,
**dadurch gekennzeichnet, dass** das Gehäuse (2) einen Gehäuseinnenraum (21) besitzt, in dem die Steuerung (17) angeordnet ist, wobei der Gehäuseinnenraum (21) insbesondere durch eine Zwischenplatte (15) von der Aufnahme (7) der Energieversorgungseinheit getrennt ist.

5. Arbeitsgerät nach Anspruch 4,
**dadurch gekennzeichnet, dass** die Lufteintrittsöffnung (10) für den ersten Kühlluftstrom (22) in den Gehäuseinnenraum (21) mündet und dass die Steuerung (17) in üblicher Arbeitshaltung des Arbeitsgeräts oberhalb der Lufteintrittsöffnung (13) für den ersten Kühlluftstrom (22) angeordnet ist.

6. Arbeitsgerät nach Anspruch 4 oder 5,
**dadurch gekennzeichnet, dass** zwischen der Zwischenplatte (15) und der Gehäusewand (33) des Gehäuses (2) ein zweiter Spalt (16) gebildet ist, durch den der zweite Kühlluftstrom (23) in den Gehäuseinnenraum (21) des Arbeitsgeräts strömt.

7. Arbeitsgerät nach Anspruch 6,
**dadurch gekennzeichnet, dass** die Steuerung (17) benachbart zu einem Abschnitt des zweiten Spalts (16) angeordnet ist.

8. Arbeitsgerät nach einem der Ansprüche 4 bis 7,
**dadurch gekennzeichnet, dass** das Arbeitsgerät eine erste Längsseite (30) und eine gegenüberliegende, zweite Längsseite (31) besitzt, wobei an der ersten Längsseite (30) die Lufteintrittsöffnung (10) angeordnet ist.

9. Arbeitsgerät nach Anspruch 8,
**dadurch gekennzeichnet, dass** der erste Kühlluftstrom (22) an der ersten Längsseite (30) in das Gehäuse (2) eintritt und von der ersten Längsseite (30) in Richtung auf die zweite Längsseite (31) strömt, wobei der erste Kühlluftstrom (22) benachbart zur zweiten Längsseite (31) im Gehäuse (2) umgelenkt wird und zurück in Richtung auf die erste Längsseite (30) strömt.

10. Arbeitsgerät nach Anspruch 8 oder 9,
**dadurch gekennzeichnet, dass** der erste Kühlluftstrom (22) und der zweite Kühlluftstrom (23) das Gehäuse (2) über eine gemeinsame Luftaustrittsöffnung (13) verlassen, wobei die Luftaustrittsöffnung (13) insbesondere im Bereich der ersten Längsseite (30) und unterhalb der Lufteintrittsöffnung (10) angeordnet ist.

11. Arbeitsgerät nach einem der Ansprüche 8 bis 10,
**dadurch gekennzeichnet, dass** der zweite Kühlluftstrom (23) an der ersten Längsseite (30) und an der zweiten Längsseite (31) aus der Aufnahme (7) der Energieversorgungseinheit in den Gehäuseinnenraum (21) strömt.

12. Arbeitsgerät nach einem der Ansprüche 1 bis 11,
**dadurch gekennzeichnet, dass** die Energieversorgungseinheit ein Akkupack (8) ist.

13. Arbeitsgerät nach einem der Ansprüche 1 bis 12,
**dadurch gekennzeichnet, dass** der Antriebsmotor (24) ein Außenläufermotor ist und dass das Gebläserad (29) am Rotor (35) des Antriebsmotors (24) integriert ist.

14. Arbeitsgerät nach einem der Ansprüche 1 bis 13,
**dadurch gekennzeichnet, dass** das Arbeitsgerät eine Motorsäge (1) mit einem hinteren Handgriff (3) und einem Griffrohr (4) ist, wobei die Aufnahme (7) für die Energieversorgungseinheit an der Oberseite (19) des Gehäuses (2) in einem Bereich zwischen dem hinteren Handgriff (3) und dem Griffrohr (4) angeordnet ist.

## Claims

1. Hand-guided working implement with a drive motor (24) and an energy supply unit for the drive motor (24), wherein the energy supply unit is located in a receptacle (7) of a housing (2) of the working implement, wherein the working implement has an impeller (29) for delivering cooling air, wherein the impeller (29) is driven by the drive motor (24), wherein the housing (2) has at least one air inlet (10) for cooling air, via which the impeller (29) draws in a first cooling air stream (22) in operation,
wherein a second cooling air stream (23) is drawn into the housing (2) via the receptacle (7) of the energy supply unit,
**characterised in that** the working implement has an electronic control unit (17), and **in that** a first gap (32), via which the second cooling air stream (23) is drawn in, is formed between the energy supply unit and the edge of the receptacle (7).

2. Working implement according to claim 1,
**characterised in that** the receptacle (7) of the energy supply unit is located in a region remote from the tool of the working implement, and **in that** the air inlet (10) for the first cooling air stream (22) is closer to the tool than the receptacle (7) of the energy supply unit.

3. Working implement according to claim 1 or 2,
**characterised in that** the second cooling air stream (23) is used for cooling the control unit (17), wherein the control unit (17) has at least one cooling fin (18), around which the second cooling air stream (23) flows in operation.

4. Working implement according to any of claims 1 to 3,
**characterised in that** the housing (2) has a housing interior (21), in which the control unit (17) is located, wherein the housing interior (21) is in particular separated from the receptacle (7) of the energy supply unit by an intermediate plate (15).

5. Working implement according to claim 4,
**characterised in that** the air inlet (10) for the first cooling air stream (22) terminates into the housing interior (21), and **in that** the control unit (17) is located above the air inlet (10) for the first cooling air stream (22) in the usual working position of the working implement.

6. Working implement according to claim 4 or 5,
**characterised in that** a second gap (16), through which the second cooling air stream (23) flows into the housing interior (21) of the working implement, is formed between the intermediate plate (15) and the housing wall (33) of the housing (2).

7. Working implement according to claim 6,
**characterised in that** the control unit (17) is located adjacent to a section of the second gap (16).

8. Working implement according to any of claims 4 to 7,
**characterised in that** the working implement has a first longitudinal side (30) and an opposite second longitudinal side (31), the air inlet (10) being located on the first longitudinal side (30).

9. Working implement according to claim 8,
**characterised in that** the first cooling air stream (22) enters the housing (2) on the first longitudinal side (30) and flows from the first longitudinal side (30) towards the second longitudinal side (31), wherein the first cooling air stream (22) is deflected in the housing (2) adjacent to the second longitudinal side (31) and flows back towards the first longitudinal side (30).

10. Working implement according to claim 8 or 9,
**characterised in that** the first cooling air stream (22) and the second cooling air stream (23) leave the housing (2) via a common air outlet (13), the air outlet (13) being in particular located in the region of the first longitudinal side (30) and below the air inlet (10).

11. Working implement according to any of claims 8 to 10,
**characterised in that** the second cooling air stream (23) flows on the first longitudinal side (30) and the second longitudinal side (31) from the receptacle (7) of the energy supply unit into the housing interior (21).

12. Working implement according to any of claims 1 to 11,
**characterised in that** the energy supply unit is a battery pack (8).

13. Working implement according to any of claims 1 to 12,
**characterised in that** the drive motor (24) is an external rotor motor, and **in that** the impeller (29) is integrated with the rotor (35) of the drive motor (24).

14. Working implement according to any of claims 1 to 13,
**characterised in that** the working implement is a power saw (1) with a rear handle (3) and a handle tube (4), wherein the receptacle (7) of the energy supply unit is located on the top side (19) of the housing (2) in a region between the rear handle (3) and the handle tube (4).

## Revendications

1. Appareil de travail à main avec un moteur d'entraînement électrique (24) et une unité d'alimentation en énergie pour le moteur d'entraînement (24), dans lequel l'unité d'alimentation en énergie est disposée dans un logement (7) d'un boîtier (2) de l'appareil de travail, dans lequel l'appareil de travail comporte une roue de soufflante (29) pour refouler de l'air de refroidissement, dans lequel la roue de soufflante (29) est entraînée par le moteur d'entraînement (24), dans lequel le boîtier (2) comporte au moins une ouverture d'entrée d'air (10) pour de l'air de refroidissement, par laquelle la roue de soufflante (29), en fonctionnement, aspire un premier courant d'air de refroidissement (22),
dans lequel un deuxième courant d'air de refroidissement (23) est aspiré et amené dans le boîtier (2) par le logement (7) de l'unité d'alimentation en énergie, **caractérisé en ce que** l'appareil de travail comporte une commande électronique (17) et **en ce qu'**il est prévu, formé entre l'unité d'alimentation en énergie et le bord du logement (7), un premier interstice (32) par lequel le deuxième courant d'air de refroidissement (23) est aspiré.

2. Appareil de travail selon la revendication 1,
**caractérisé en ce que** le logement (7) de l'unité d'alimentation en énergie est disposé dans une zone opposée à l'outil de l'appareil de travail, et **en ce que** l'ouverture d'entrée d'air (10) pour le premier courant d'air de refroidissement (22) se trouve plus près de l'outil que le logement (7) de l'unité d'alimentation en énergie.

3. Appareil de travail selon la revendication 1 ou 2,
**caractérisé en ce que** le deuxième courant d'air de refroidissement (23) sert à refroidir la commande (17), dans lequel la commande (17) comporte en particulier au moins une ailette de refroidissement (18) autour de laquelle s'écoule, en fonctionnement, le deuxième courant d'air de refroidissement (23).

4. Appareil de travail selon l'une des revendications 1 à 3,
**caractérisé en ce que** le boîtier (2) comporte un espace intérieur de boîtier (21) dans lequel la commande (17) est disposée, dans lequel l'espace intérieur de boîtier (21) est séparé en particulier du logement (7) de l'unité d'alimentation en énergie par une plaque intermédiaire (15).

5. Appareil de travail selon la revendication 4,
**caractérisé en ce que** l'ouverture d'entrée d'air (10) pour le premier courant d'air de refroidissement (22) débouche dans l'espace intérieur de boîtier (21), et **en ce que** la commande (17), dans la position de travail habituelle de l'appareil de travail, est disposée au-dessus de l'ouverture d'entrée d'air (13) pour le premier courant d'air de refroidissement (22).

6. Appareil de travail selon la revendication 4 ou 5,
**caractérisé en ce qu'**il est prévu, formé entre la plaque intermédiaire (15) et la paroi de boîtier (33) du boîtier (2), un deuxième interstice (16) par lequel le deuxième courant d'air de refroidissement (23) arrive dans l'espace intérieur de boîtier (21) de l'appareil de travail.

7. Appareil de travail selon la revendication 6,
**caractérisé en ce que** la commande (17) est voisine d'une section du deuxième interstice (16).

8. Appareil de travail selon l'une des revendications 4 à 7,
**caractérisé en ce que** l'appareil de travail comporte un premier côté longitudinal (30) et un deuxième côté longitudinal (31) opposé, dans lequel l'ouverture d'entrée d'air (10) est disposée sur le premier côté longitudinal (30).

9. Appareil de travail selon la revendication 8,
**caractérisé en ce que** le premier courant d'air de refroidissement (22) entre dans le boîtier (2) sur le premier côté longitudinal (30) et s'écoule du premier côté longitudinal (30) en direction du deuxième côté longitudinal (31), dans lequel le premier courant d'air de refroidissement (22) est dévié dans le boîtier (2) près du deuxième côté longitudinal (31) et revient en direction du premier côté longitudinal (30).

10. Appareil de travail selon la revendication 8 ou 9,
**caractérisé en ce que** le premier courant d'air de refroidissement (22) et le deuxième courant d'air de refroidissement (23) quittent le boîter (2) par une ouverture de sortie d'air commune (13), dans lequel l'ouverture de sortie d'air (13) est disposée en particulier dans la zone du premier côté longitudinal (30) et au-dessous de l'ouverture d'entrée d'air (10).

11. Appareil de travail selon l'une des revendications 8 à 10,
**caractérisé en ce que** le deuxième courant d'air de refroidissement (23) arrive du logement (7) de l'unité d'alimentation en énergie dans l'espace intérieur de boîtier sur le premier côté longitudinal (30) et sur le deuxième côté longitudinal (31).

12. Appareil de travail selon l'une des revendications 1 à 11,
**caractérisé en ce que** l'unité d'alimentation en énergie est une batterie (8).

13. Appareil de travail selon l'une des revendications 1 à 12,
**caractérisé en ce que** le moteur d'entraînement (24) est un moteur à induit extérieur et **en ce que** la roue de soufflante (29) est intégrée sur le rotor (35) du moteur d'entraînement (24).

14. Appareil de travail selon l'une des revendications 1 à 13,
**caractérisé en ce que** l'appareil de travail est une tronçonneuse (1) avec une poignée arrière (3) et une poignée tubulaire (4), dans lequel le logement (7) pour l'unité d'alimentation en énergie est disposé sur le côté supérieur (19) du boîtier (2) dans une zone située entre la poignée arrière (3) et la poignée tubulaire (4).
